# EUROPEAN PATENT SPECIFICATION

(11) **EP 0 558 366 B1**
(45) Date of publication and mention of the grant of the patent: **25.09.1996**
(21) Application number: 93400319.5
(22) Date of filing: 09.02.1993
(51) Int. Cl.: B29B 11/16, B29C 35/08

(54) **Process of making a rigid multi-layer preform**
Verfahren zur Herstellung einer starren mehrschichtigen Vorform
Procédé pour le moulage d'une préforme multicouche rigide

(30) Priority: 24.02.1992 US 840346
(43) Date of publication of application: 01.09.1993
(73) Proprietor: COOK COMPOSITES AND POLYMERS, Port Washington, WI 53074 (US)
(72) Inventor: Boeckeler, Rudolph Henry, Grafton, Wisconsin 53024 (US)
(74) Representative: Jolly, Jean-Pierre

(56) References cited:
- EP-A- 0 431 442
- WO-A-91/10547
- DE-A- 1 815 329
- US-A- 5 002 476

## Description

The invention relates to a process of making preforms using actinic radiation.

Preforms are rigid, self-supporting structures comprising reinforcement fiber bonded either to itself in the case of continuous strand fiber, or to one another in the case of chopped fiber. The fibers are bonded together in such a manner that the preform has a mesh-like network of open channels or interstices throughout its body that can be readily penetrated by a gas or liquid. The preforms often have a complex shape, and are used as a reinforcement for various molded articles, such as structural and decorative automobile and appliance parts.

Preforms are typically prepared by applying a binder to the fibers, shaping the fibers into a desired configuration, and then curing or rigidizing the binder such that the fibers maintain the desired shape. The binder can be applied to the fibers by any technique, e.g., spraying, roll coating, curtain coating, splatter coating, dipping, etc. and it is applied to a degree sufficient to coat the fibers without filling the preform interstices. Some of these methods, such as spraying, allows the binder to be applied either before or after the fibers are shaped into the desired configuration. If the binder is applied after the fibers are shaped, then the fibers must be held in place by any suitable means, e.g. stitching, taping, etc, which does not interfere with the application of the binder. If the binder is applied before shaping, then the fibers are usually shaped by the use of a mold surface and/or a rigid forming tool.

Many binders in use today are heat curable binders. Typically, these binders contain an unsaturated polyester resin dispersed or dissolved in water or in an organic solvent. The binder is applied to the fibers, and the binder-containing fibers are then exposed to elevated temperatures to remove the water or solvent and to cure the binder. While in widespread use, heat curable binders suffer from a number of disadvantages, e.g. they are energy intensive, slow to cure, energy inefficient, and the like, relative to other avalaible binders, such as those that cure upon exposure to actinic radiation.

EP-A-0 431 442 discloses a method of making a rigid preform cf. the preamble of claim 1, comprising the steps of : cutting a blank of a predetermined shape from a mat of reinforcing material ; applying a binder resin to the blank ; shaping the blank into the shape of the preform ; and applying electromagnetic energy to the shaped blank to rigidize the binder resin. A mold for shaping the reinforcement material comprises a mold cavity defined by microwave or ultraviolet transparent material divided into separate and separable mold parts and, for microwave applications, each part carries one half of a split microwave waveguide which directs microwave energy to cure the binder resin when the mold is closed. For ultraviolet applications, an ultraviolet source (or sources) is located in the mold.

Although binder systems that cure when exposed to actinic radiation have decided advantages over heat curable systems, e.g. they are less energy intensive and more energy efficient, cure faster, are easier to use, are generally safe and environmentally clean (these systems usually do not include an organic solvent, and thus do not emit volatile organic compounds), the process of making preforms using these systems has room for improvement. For example, many such systems require the use of molding surfaces and/or forming tools constructed of rigid thermoformable clear thermoplastic, or dear castable thermoplastic or thermosetting materials that are substantially transparent to actinic radiation. Moreover, while processes for making preforms using binders that cure upon exposure to actinic radiation are faster than processes which use heat curable binders, even faster processes are in demand particularly for reaction transfer molding (RTM) and structural reaction injection molding (SRIM) techniques.

Still another limitation on actinic radiation curing processes for making preforms is the difficulty of quickly curing the binder through multiple layers of fiber. In some processes, the preform is constructed from fiber mats that are superimposed upon one another into a stack of as many as five or six. When this stack is placed on a molding surface or under a forming tool, the binder contained in the one or two mats furthest removed from the actinic radiation source may not cure or cure only partially. This results in a defective preform.

Yet another limitation upon the speed at which a mat or stack of mats can be converted into a preform by actinic radiation curing is the presence of oxygen during the curing process. Oxygen is known to inhibit the rate of radiation-induced curing of binders that could otherwise be obtained. Accordingly, an interest exists in the art for a substantially anaerobic process for preparing preforms from one or more mats containing a binder that is curable upon exposure to actinic radiation.

According to this invention a rigid, multilayer preform is made from a stack of mats comprising a top mat and a bottom mat, each mat containing a binder that cures upon exposure to actinic radiation and each mat comprising fibers that are bonded to one another such that a mesh-like network of open channels exist throughout the mat and the stack, by a process comprising :
A. Applying the stack to a mold surface under aerobic conditions such that the bottom mat is in contact with the mold surface and oxygen is present in the network of open channels ;
B. Covering the stack with a substantially oxygen-impervious forming tool such that the tool extends over the top mat thereby defining an air-tight volume between the mold surface and the toot, the stack contained within the volume ;
C. Drawing a vacuum on the volume that sufficient oxygen is removed from the volume and network of channels in the stack to render both substantially anaerobic ;
D. Closing the forming tool about the stack with sufficient force such that the tool presses the stack against the mold surface and that the stack of mats substantially conforms to the shape of the mold surface ;
E. Exposing the stack in step D to a curing amount of actinic radiation to form a rigid, multilayer preform ; and
F. Removing the preform from the mold surface.

Preferred embodiments are disclosed in the dependent claims.

In one embodiment, the actinic radiation is infrared radiation, and the binder includes a polymerization initiator that is activated upon exposure to heat, e.g. a peroxide initiator. Preforms made by the process of this invention are prepared quickly and in an energy efficient manner.

The mats used in this invention can be made from any suitable reinforcing fiber. The fibers can be either organic or inorganic. Illustrative organic fibers include the high molecular weight fibers such as polyester, polyethylene, aramide, polyamide and the like. Inorganic fibers include glass, asbestos, metal, etc. Depending upon the nature of the actinic radiation, certain fibers may be preferred over other fibers. For example, in a process where the actinic radiation is ultraviolet light, fibers that are transparent to ultraviolet light (e.g. glass, cellulose, polyamide, etc.) are preferred over fibers that are not transparent ultraviolet light (e.g. graphite, metal, etc.). As here used "transparent" means that the fiber transmits or conducts sufficient actinic radiation to rapidly cure the binder. However even in those non-infrared embodiment of this invention in which the fibers of the mats are not substantially transparent to the actinic radiation needed to cure the binder, multiple layers of mats (or the interior of a relatively thick mat) can be adequately cured due to the scattering of the radiation that occurs within the mat stack (or the interior of a thick mat). The extent that the curing radiation scatters within or penetrates the interior of the mat or stack is a factor of a number of variables, e.g. radiation intensity, composition of the fibers, geometry and density of the network of open channels etc, but in general the more porous the mat (as measured by its number and distribution of open channels), the greater the opportunity for the curing radiation to penetrate to the interior of the mat or stack.

In the infrared embodiments of this invention, the transparency of the fiber to the infrared radiation is less of a factor in the curing of the binder. Infrared radiation typically generates heat upon contact with the fibers of the mat or stack, particularly with fibers that are prone to absorb it, and this heat is available for promoting the cure of the binder. The heat will permeate throughout the mat or stack by conduction and thus binder-coated fibers that have poor, if any, transparency to the infrared radiation can still be readily formed into a preform. This is particularly true in those embodiments in which the binder system includes a heat-sensitive polymerization initiator and preferably, a metallic salt or drier.

The mat used in this invention can be made by any suitable process, and are typically porous, sheet-like structures with fabric-like flexibility. Fiber, either continuous .strand or chopped, is typically applied to a flat surface in a loosely packed manner to a predetermined thickness such that the fibers form a porous body which contains open channels or interstices throughout its dimensions. The fiber is coated, either before or after its application to the flat surface, with a binder that upon cure, bonds the fibers to one another in such a manner that the fibers hold their place relative to one another but the mat as a whole exhibits fabric-like flexibility. The fibers are coated with the binder to a degree sufficient to coat the fibers without filling the interstices or open channels among the fibers. Since the end use of most mats is to prepare preforms which in turn will be used to prepare thin, reinforced plastic molded articles, the mats are generally prepared as thin sheets, typically less than 6,4 mm in thickness, preferably less than 3,2 mm in thickness. While conventional mat production techniques generate mats in sheet-like form, the mats used in this invention can be made and used in virtually any shape or configuration, either formed as such or subsequently shaped to such from a mat sheet (e.g., trimming a rectangular piece of mat into an oval or circular configuration).

The process of this invention makes the preforms from a plurality of mats superimposed upon one another to form a stack. The stack of mats will contain at least a top mat and a bottom mat, and preferably at least one interior or core mat Depending upon the properties that are desired to be imparted to the finished reinforced plastic molded article, the mats that are used to make the preform (that is used to reinforce the plastic molded article) can be of the same or different composition. For example, a three layer stack can comprise external layers of fiberglass fiber and a core layer of graphite fibers. The stack can be formed by simply placing one mat upon another or it desired, the mats can be joined to form a stack by any suitable means, e.g. stitching, adhesion, etc.

"Actinic radiation" as here used means radiation with a wave length of between about 1 millimeter to about 100 angstroms or in the vernacular, from the far or thermal infrared to the vacuum ultraviolet Preferably, the actinic radiation used in this invention is in the range from about 100,000 angstroms to about 1,000 angstroms, more preferably in the range from about 60,000 to 1,000 angstroms.

Any source of actinic radiation commonly used for curing thin films can be used in this invention. With respect to sources of ultraviolet radiation, ultraviolet lamps with a rating of at least about 39,4 watts/cm are preferred, and lamps with ratings of about 78,8 watts/cm per inch are more preferred. Examples of such ultraviolet radiation sources are medium and high pressure mercury vapor lamps and electrodeless mercury vapor lamps.

Particularly advantageous ultraviolet radiation sources for curing a stack of mats formed into a complex shape are those which spread their energy over a large area, such as pulse lamps with multidirectional reflectors. Especially suitable for concentrating energy over a small area, such as in a process of attaching a small appendage to a larger preform, are flexible optical wands.

In the case of visible light radiation, preferred sources are tungsten filament spot/flood lamps with a rating of at least about 75 watts, more preferably of at least about 300 watts, low pressure mercury vapor lamps (fluorescent), high pressure doped mercury vapor lamps with a rating of at least 300 watts, metal halide lamps with a rating of at least 100 watts, more preferably 400 watts, and xenon flash lamps. In the case of infrared radiation, preferred sources are lamps with ratings of at least about 39,4 watts/cm preferably of at least about 78,8 watts/cm. Examples of infrared radiation sources are high intensity tungsten quartz tube lamps (2500° K operating temperature).

The binders that are used in this invention are binders that cure upon exposure to actinic radiation. If the actinic radiation is in the infrared portion of the electromagnetic radiation spectrum ("ERS"), then a binder that cures upon exposure to infrared radiation is used. Likewise, if the actinic radiation is in the visible or ultraviolet light portion of the ERS, then a binder that cures upon exposure to visible or ultraviolet light radiation, respectively, is used.

Typical examples of binders that cure upon exposure to ultraviolet radiation are those known as photocurable or photosensitive binders. These binders consist of (a) film forming polymers or oligomers capable of crosslinking through photochemical reactions, optionally in admixture with (b) α, β-ethylenically unsaturated monomers as reactive diluents, and (c) photoinitiators or photosensitizers.

Illustrative oligomers which cure upon exposure to ultraviolet radiation include unsaturated polyesters, urethane acrylates and methacrylates, epoxy acrylates and methacrylates, polyester acrylates and methacrylates, polyether acrylates, and cationically polymerizable prepolymers wherein ultraviolet radiation is used to unblock a cationic catalyst.

Ethylenically unsaturated monomers include any of the well-known monomers conventionally used in radiation curable compositions such as mono-, di-, and trifunctional acrylic and methacrylic esters, N-vinyl-2-pyrrolidone, N-methylol acrylamide, hydroxy alkyl esters of acrylic and methacrylic acid, and aromatic vinyl and divinyl compounds.

Suitable photoinitiators are the compounds commonly used in radiation curable compositions such as aromatic keto compounds derived from benzophenone, halogenated benzophenones, benzoin and its derivatives, anthraquinone and its derivatives, acetophenone and its derivatives, Michler's ketone, thioxanthones and alkyl phosphine oxides. Co-initiators or hydrogen donating compounds may also be used to enhance reactivity. examples of these materials are tertiary amine compounds such as N-methyl diethanolamine and triethanolamine.

Visible light curable binders are comprised of the same oligomers and monomers used in the UV-curable binders. The photoinitiators which are used for visible light curing are those which have appreciable absorptions in the visible range, generally 380 nm to 450 nm. Examples of such initiators are d,1-camphorquinone, acyl phosphine oxides, and 2-methyl-1[4-(methylthio) pheny]-2-morpholinopropane.

The photoinitiators and coinitiators are included in the binder to promote the rate and degree of cure. These materials are usually present, alone or in combination, in the range from about 0.1 to 10 % by weight, preferably in the range from about 0.5 to 6 weight percent, based on the weight of the binder. In addition, the binder can contain other materials such as fillers, pigments, dyes and additives to improve rheology, adhesion to the fibers, cure rate and other process parameters.

Binders that cure upon exposure to infrared radiation consist of (a) film forming α,β-ethylenically unsaturated coreactants capable of crosslinking through thermal means, (b) a polymerization initiator, and preferably a polyunsaturated monomer which serves as a polymerization initiator and crosslinker, and (c) a metallic salt (drier).

The unsaturated coreactants which can be employed include any of the common α,β-ethylenically unsaturated oligomers and monomers which are capable of undergoing thermally induced tree radical polymerization. Examples of these oligomeric coreactants include unsaturated polyesters, urethane acrylates and methacrylates, epoxy acrylates and methacrylates, polyester acrylates and methacrylates, and polyether acrylates and methacrylates.

The polymerization initiators which are suitable are any of the common peroxides such as benzoyl peroxide ; dialkyl or aralkyl peroxides such as di-t-butyl peroxide, dicumyl peroxide, cumylbutyl peroxide, 1,1-di-t-butyl peroxy 3,5-trimethylcyclohexane, 2,5-dimethyl-2,5-di-t-butyl peroxy hexane and bis (alpha-t-butyl peroxyisopropylbenzene) ; peroxyesters such as t-butyl peroxypivalate, t-butyl peroctoate, t-butyl perbenzoate, 2,5-dimethylhexyl-2,5-di (perbenzoate), dialkylperoxymonocarbonates and peroxydicarbonates ; hydroperoxides such as t-butyl hydroperoxide, p-methane hydroperoxide, pentane hydroperoxide and cumene hydroperoxide ; and ketone peroxides such as cyclohexanone peroxide and methyl ethyl ketone peroxide. These peroxides can be used alone or in combination with one another or in combination with a co-catalyst such as N, N-dimethyl-p-toluidine, N, N-dimethylaniline, N, N-diethylaniline, 2,4-pentanedione, and N, N-dimethylacetaniline, as well as metal salts such as octoates, naphtenates, and neodecanoates of cobalt, manganese, vanadium, potassium, zinc, and copper. Co-catalysts are generally used in conjunction with initiators that cure at low temperatures, such as methylethyl ketone peroxide or cumene hydroperoxide.

Representative initiator-crosslinkers include polyallic compounds, such as polyallylic esters and ethers. The initiator-crosslinker is usually present in the range of about 5 to 25 % by weight based on the total weight of coreactant and initiator-crosslinker, preferably from about 10 to 20 % by weight.

The metallic salts which are used in this invention are octoates, naphtenates and neodecanoates of coblat, manganese, copper, zinc, potassium, lead and vanadium. Preferred are the salts of cobalt and manganese. These metallic driers are present in concentrations from about 0.001 to 0.5 weight percent and preferably from about 0.1 to 0.3 weight percent.

The process of preparing preforms using infrared radiation and binder systems that cure by way of free-radical polymerization is particularly well adapted to mats made of fiber that is not transparent to either ultraviolet or visible light radiation. In this embodiment, mats made of such fibers as aramide, carbon, opaque ceramic and/or densely woven glass fibers are quickly and efficiently cured. Moreover, the mold surface and forming tool can be constructed of materials that are not transparent to ultraviolet and visible light radiation. Preferably, these pieces of equipment are constructed such that one is transparent to infrared radiation, and the other is a good insulator. In this manner, that part of the mat or stack that is not cured by the infrared radiation is efficiently cured by the heat generated in the mat or stack by the radiation. To render this particular embodiment even more efficient, the insulated part of the equipment (which can be insulated with such materials as closed-cell urethane foam) can be preheated to prevent it from acting as a heat sink during the curing process.

The binder can be applied to the mat or stack of mats in any manner that deposits sufficient binder on the fibers comprising the mat or stack of mats such that upon cure, the mat or stack will be rigid but the channels or interstices that exist among the fibers will remain open. Suitable means for applying the binder to the fibers of the mats include spraying, splatter coating, roll coating and curtain,coating. The binder can be applied to the fibers of the mat either before or after the mats are applied to the mold surface, although application prior is preferred. The binders used to convert the mats into a preform can be the same binders used to make the mats from the discontinuous or continuous fibers.

The amount of binder that is applied to the fibers of the mat will vary with the composition of the binder, the nature of the actinic radiation, and the composition of the fiber. Typically, sufficient binder is applied to coat the individual strands of fiber but not to fill the open channels or interstices that exist among the fibers, and this amount is generally in the range of from about 1 to 15 weight percent of the fibers to be coated (i.e. the mat), preferable in the range from about 3 to 5 weight percent.

The binders used in this invention are preferably 100 % reactive, i.e., are neat or are free or substantially free of solvent. While the binder can be diluted with solvent, this is generally undesirable because the solvent must eventually be removed and recaptured, and this involves additional process steps, is generally inefficient, and is environmentally cumbersome. If a solvent is used, it is preferably used in nominal amounts, typically less than 10 weight percent of the curable material, and is of course, compatible with the curable material.

The mold surface onto which the stack of mats is placed can vary to convenience. In one embodiment, the mold surface is simply a vacuum table configurated to the shape of the desired preform, which itself is configurated to the shape of the molded plastic article in which it shall serve as a reinforcing member. The mold surface typically contains a plurality of perforations through which a vacuum can be drawn thereby pulling or drawing the stack of mats which are upon it into a compressed state conforming to its configuration. The mold surface can be comprised of any suitable material such as metal, plastic, etc. and in one embodiment, is comprised of a material that is transparent to a very substantial degree to the actinic radiation that is used to cure the binder coating the fibers of the stack of mats. The size of the mold surface can vary widely, and it is only dependent upon the size of the desired preform.

The stack of mats are placed upon the mold surface such that the bottom mat is in contact with the mold surface. The top mat is covered with a gas impervious, forming tool such that a volume is defined between the mold surface and the film, and this volume is substantially filled, preferably completely filled, by the mat stack While the forming tool can be made of virtually any material that does not impede the preform manufacturing process, ideally it is made of a material, like the mold surface itself, that is substantially transparent to the actinic radiation used to cure the binder.

The forming tool extends over, but not necessarily in contact with, the mat stack and is in contact with the external margins or edges of the mold surface such that the volume is enclosed and sealed. Suitable sealants can be employed to enhance the integrity of the seal between the tool and mold surface margins or edges. The tool can be extended over the top mat of the stack either before the mat stack is applied to the mold surface or subsequent to its application to the mold surface.

In one embodiment, the forming tool is a rigid, gas-impervious surface that complements the mold surface such that when the two are in a mated relationship, an air-tight seal is formed about the volume that they define, a volume that has the shape of the desired preform, and in which the stack is fitted, preferably closely fitted. The forming tool is then forced against the stack such that the stack is compressed against and conforms to the shape of the mold surface, and a vacuum is drawn on the volume. The vacuum can be drawn before, during or after the stack is pressed against the mold surface, and preferably it is maintained throughout the time in which the stack is exposed to the curing actinic radiation.

In another embodiment, the forming tool is a gas impervious, flexible plastic film that is placed over a mat stack which has been placed on the mold surface. The film is in contact with the external margins of the mold surface such that an air-tight volume between it and the mold surface is defined.

After the film has been extended over the top mat of the stack and sealed to the margin or periphery of the mold surface, a vacuum is drawn on the volume such that the gas (e.g. air) within the volume is substantially removed. The strength of the vacuum will vary with the nature of the materials and mold surface, but a vacuum of at least about 635 mm Hg, preferably of at least about 735 mm Hg, is used. This results in a compression of the mat stack by the film being drawn to the mold surface. After the desired vacuum has been drawn, the mat stack is then exposed to a curing amount of actinic radiation until substantially all of the binder is cured. The amount of time to effect this cure is also dependent upon a myriad of variables, but typically the cure is effected in less than 60 seconds, and in some instances, less than 10 seconds. After the cure is effected, the vacuum is released, the film is removed, and the mat stack (now a preform) is removed from the mold surface.

The gas impervious, flexible plastic films used in the practice of this invention are preferably transparent to the actinic radiation used to cure the binder on the mat stack. If the binder is curable by ultraviolet radiation, then the film is preferably transparent to ultraviolet radiation. Likewise, if the binder is curable by infrared or visible light radiation, then the film is preferably transparent to infrared or visible light radiation, respectively. By transparent is meant that sufficient radiation passes through the film in order to rapidly cure the binder. Representative ultraviolet transparent films include those of polyamide, polyethylene, polypropylene, polyurethane, or polymethylmethacrylate. Representative infrared transparent films include those made of polyester, polyamide, polyethylene, polypropylene, polyurethane, cellophane, cellulose acetate, polyvinyl chloride or polyvinylidene chloride. Representative visible light transparent films include those made of polyamide, polyethylene, cellophane, cellulose acetate, or polyvinylidene chloride. Preferred ultraviolet transparent films are those made of polyamide and polyethylene, or polypropylene ; preferred infrared transparent films are those made of polyester, polyamide, polyethylene or polypropylene ; and preferred visible light transparent films are those made of polyethylene, polyamide or polypropylene.

The following examples are illustrative of specific embodiments of this invention and unless indicated to the contrary, all parts and percentages are by weight.

### Example 1

A peroxide curable thermosetting binder composition consisting of 80 parts of a urethane dimethacrylate oligomer (NUPOL® 46-4040, a product of Cook Composites and Polymers), 0.3 parts of cobalt octoate (12 % solution), 0.05 parts of methyl ethyl ketoxime, 20 parts polyallyl glycidyl ether (Santolink® XI-100, a product of Monsanto Chemical Co.), and 1 part of cumene hydroperoxided was applied to 42,5 g continuous strand glass mat at a concentration of 5 grams binder per 100 grams glass.

Five layers of the thusly binder-treated glass mat were placed over a 2,54 cm diameter by 1,90 cm long hexagonal nut in the center of a 15,2 cm diameter by 3,8 cm deep cylindrical-shaped steel mold held at 70°C. The nut was attached to a threaded pipe which passed through the mold and was connected to a vacuum pump by means of sealed fittings Adhesive sealant GS 100, a product of Airtech International, Inc. was placed about the top of the mold, and a piece of polyamide film (Airtech WL 4400) was sealed over the mold. A 0.98.10⁵ Pa (737 mm Hg) wacuum was applied to the mold which caused the film to close about and compress the glass mats to the hex nut.

The binder-treated glass was then exposed for 1 minute to an infrared lamp having an output of 39,4 watts/cm. The lamp was positioned over the mold such that the infrared radiation passed through the polyamide film to the mat stack. Upon removal from the mold, the 5 layers of glass mat were rigidly bonded together, maintained their hexagonal shape, and no odor or tackiness of uncured binder could be detected.

### Example 2

A peroxide-curable binder composition containing 80 parts Nupol® 46-4040, 0.3 parts cobalt-potassium drier (Nuocure® CK, a product of Huels Corp.) 0.1 parts methyl ethyl ketoxime, 20 parts Santolink® XI-100, and 1 part methyl ethyl ketone peroxide was applied to Kevlar® S703 K129 fabric (a product of E.I. DuPont de Nemours) at a concentration of 10 grams binder per 100 grams Kevlar.

Six layers of the thusly treated Kevlar were placed in the heated mold described in Example 1. The mold was sealed with a polyamide film, and 737 mm Hg vacuum was drawn forcing the kevlar to conform to the shape of the nut in the same manner as described in Example 1. After exposure of the binder-treated fabric for 30 seconds to infrared radiation from a 39,4 watt/cm lamp, all 6 layers of Kevlar were rigid, held their hexagonal shape and no odor or tackiness of uncured binder was present.

### Example 3

Six layers of 42,5 g continuous strand glass mat were treated with epoxy acrylate UV-curable binder (Nupol® XP-44-A908-97, a product of Cook Composites and Polymers). The glass was placed in the mold of Example 1 and the same procedure of sealing and subjecting to vaccum was followed as described in Example 1.

The binder-treated glass was exposed for 15 seconds to ultraviolet light from a single 400 watt mercury vapor lamp (Ultraspot® 400/T manufactured by Dr. Hoenle, GmbH). Upon removal from the mold, the top 4 layers of glass mat were rigid and firmly bonded together, the 5th layer was semirigid and loosely bonded to the 4th layer. The 6th layer was flexible and not bonded to the layer above.

### Example 4

A peroxide-curable thermosetting binder composition containing 80 parts of a polyester acrylate oligomer (XR-29-A955-6, a product of Cook Composites and Polymers), 0.3 parts 12 % solution of cobalt octoate, 0.1 parts methyl ethyl ketoxime, 20 parts Santolik® XI-100 and 1 part cumene hydroperoxide was applied by roll coat onto continuous strand glass mat at a concentration and 3 parts binder per 100 parts glass.

Three pieces of glass thusly treated were wrapped around a cylindrical screen and secured with adhesive tape. After one minute exposure to infrared radiation the 3 layers of glass were rigid and tightly bonded together. No odor or tackiness of uncured resin was present.

### Example 5

A visible light curable binder composition containing 100 parts Nupol® 46-4040 and 0.5 parts of d,1-camphorquinone was applied to 42,5 g continuous strand glass mat at a concentration of 5 grams binder to 100 grams glass.

Four layers of thusly treated glass mat were placed in the mold described in Example 1 and irridiated under vacuum for 5 minutes with a 75 watt General Electric flood light.

Upon removal from the mold the top 2 layers were very rigid and tightly bond together. The 3rd layer of glass was semirigid and loosely bonded to the 2nd layer. The 4th layer was quite flexible.

### Example 6

A visible light curable composition consisting of 57.7 parts by weight of an epoxy acrylate oligomer (Chempol® 19-6605, a product of Cook Composites and Polymers), 33.0 parts of tripropylene glycol diacrylate, 33.0 parts of trimethylolpropane triacrylate, 3.0 parts of 2-hydroxy ethylmethacrylayte, 2.0 parts of N-methyl diethanolamine and 1.0 part of 2,4,6 trimethylbenzoyldiphenylphosphine oxide was applied to 42,5 g continuous strand glass mat such that 6 % of the total weight was binder.

Four layers of the thusly treated glass mat were placed in the mold described in Example 1, 0.95.10⁵ Pa (711 mm Hg) wacuum was drawn on the mold cavity and the glass was exposed to visible light emitted by 3 tungsten halogen lamps. After 30 seconds exposure all 4 layers of glass were rigid and held their shape when removed from the mold.

## Claims

1. A process of preparing a rigid, multi-layer preform from a stack of mats comprising a top mat and a bottom mat, each mat containing a binder that cures upon exposure to actinic radiation and each mat comprising fibers that are bonded to one another such that a mesh-like network of open channels exists throughout the mat and the stack, said process being characterised by :
A. Applying the stack to a mold surface under aerobic conditions such that the bottom mat is in contact with the mold surface and oxygen is present in the network of open channels ;
B. Covering the stack with a substantially oxygen-impervious forming tool such that the tool extends over the top mat thereby defining an air-tight volume between the mould surface and the tool, the stack contained within the volume ;
C. Drawing a vacuum on the volume such that sufficient oxygen is removed from the volume and network of channels in the stack to render both substantially anaerobic;
D. Closing the forming tool about the stack with sufficient force such that the tool presses the stack against the mold surface and that the stack substantially conforms to the shape of the mold surface ;
E. Exposing the stack in step D to a curing amount of actinic radiation to form a rigid, multi-layer preform ; and
F. Removing the preform from the mold surface.

2. The process of Claim 1 in which the vacuum drawn in Step C is at least about 0.85.10⁵ Pa (635 mm Hg).

3. A process according to claim 1 or claim 2, in which the fibers comprising each mat are substantially transparent to the actinic radiation of Step E.

4. A process according to one of claims 1 to 3, in which the forming tool is a flexible plastic film.

5. A process according to one of claims 1 to 3, in which the forming tool is rigid.

6. A process according to one of claims 1 to 5, in which at least one of the mold surface and the forming tool is transparent to the actinic radiation used in Step E.

7. A process according to one of claims 1 to 6, in which the actinic radiation is ultraviolet radiation.

8. A process according to one of claims 1 to 7, in which the forming tool is made of a material selected from the group consisting of polyamide, polyethylene, polypropylene, polyuretane and polymethylmethacrylate.

9. A process according to one of claims 1 to 6, in which the actinic radiation is visible light.

10. A process according to one of claims 1 to 4, in which the forming tool is a flexible plastic film made of a material selected from the group consisting of polyamide, polyethylene, polypropylene, cellophane, cellulose acetate and polyvinylidene chloride.

11. A process according to one of clamis 1 to 6, in which the actinic radiation is infrared radiation

12. A process according to one of claims 1 to 11, in which the forming tool is a flexible plastic film made of a material selected from the group consisting of polyester, polyamide, polyethylene, polypropylene, polyurethane, cellophane, cellulose acetate, polyvinyl chloride, and polyvinylidene chloride.

13. A process according to one of claims 1 to 6, in which the forming tool is a rigid forming tool made of a material selected from the group consisting of polyamide, polyethylene, polypropylene, cellulose acetate, polyester, polyurethane, and polyvinyl chloride.

## Patentansprüche

1. Verfahren zur Herstellung eines starren mehrschichtigen Vorformlings aus einem Stapel von Matten mit einer oberen und einer unteren Matte, wobei jede Matte ein Bindemittel enthält, das bei Aussetzung an eine chemisch wirksame Strahlung aushärtet, und wobei jede Matte Fasern umfaßt, die so miteinander verbunden werden, daß ein maschenförmiges Netz aus offenen Kanälen innerhalb der gesamten Matte und des Stapels entsteht, wobei das Verfahren gekennzeichnet ist durch:
A. Aufbringen des Stapels auf eine Formoberfläche unter aeroben Bedingungen dergestalt, daß die untere Matte mit der Formoberfläche in Kontakt steht und in dem aus offenen Kanälen bestehenden Netz Sauerstoff vorhanden ist;
B. Überdeckung des Stapels mit einem weitgehend sauerstoffundurchlässigen Formwerkzeug dergestalt, daß sich das Werkzeug über die obere Matte erstreckt und auf diese Weise ein luftundurchlässiger Hohlraum zwischen der Formoberfläche und dem Werkzeug gebildet wird, wobei sich der Stapel im Hohlraum befindet;
C. Beaufschlagung des Hohlraums mit einem Vakuum, um eine ausreichende Menge Sauerstoff aus dem Hohlraum und dem aus Kanälen bestehenden Netz im Stapel zu entfernen und beide weitgehend anaerob zu machen;
D. Umschließen des Stapels durch das Formwerkzeug mit einer so ausreichenden Kraft, daß das Werkzeug den Stapel gegen die Formoberfläche drückt und daß sich der Stapel weitgehend der Form der Formoberfläche anpaßt;
E. Aussetzung des Stapels in Schritt D an eine zum Aushärten ausreichende chemisch wirksame Strahlung, um einen starren mehrschichtigen Vorformling zu bilden; und
F. Entfernung des Vorformlings von der Formoberfläche.

2. Verfahren nach Anspruch 1, dadurch gekennzeichnet, daß das nach Schritt C erzeugte Vakuum einen Wert von mindestens 0.85.10HOCH5 Pa (635 mm Hg) hat.

3. Verfahren nach Anspruch 1 oder Anspruch 2, dadurch gekennzeichnet, daß die zu jeder Matte gehörigen Fasern gegenüber der chemisch wirksamen Strahlung nach Schritt E weitgehend durchlässig ist.

4. Verfahren nach irgendeinem der Ansprüche 1 bis 3, dadurch gekennzeichnet, daß es sich bei dem Formwerkzeug um eine elastische Kunststoff-Folie handelt.

5. Verfahren nach irgendeinem der Ansprüche 1 bis 3, dadurch gekennzeichnet, daß das Formwerkzeug starr ist.

6. Verfahrens nach irgendeinem der Ansprüche 1 bis 5, dadurch gekennzeichnet, daß mindestens eine Formfläche und das Formwerkzeug gegenüber der chemisch wirksamen Strahlung nach Schritt E durchlässig sind.

7. Verfahren nach irgendeinem der Ansprüche 1 bis 6, dadurch gekennzeichnet, daß es sich bei der chemisch wirksamen Strahlung um UV-Strahlung handelt.

8. Verfahren nach irgendeinem der Ansprüche 1 bis 7, dadurch gekennzeichnet, daß das Formwerkzeug aus einem Material hergestellt ist, das zu der aus Polyamid, Polyethylen, Polypropylen, Polyurethan und Polymethylmethacrylat bestehenden Gruppe gehört.

9. Verfahren nach irgendeinem der Ansprüche 1 bis 6, dadurch gekennzeichnet, daß die chemisch wirksame Strahlung sichtbares Licht ist.

10. Verfahren nach irgendeinem der Ansprüche 1 bis 4, dadurch gekennzeichnet, daß es sich bei dem Formwerkzeug um eine elastische Kunststoff-Folie aus einem Material handelt, das zu der aus Polyamid, Polyethylen, Polypropylen, Cellophan, Celluloseacetat und Polyvinylidenchlorid bestehenden Gruppe gehört.

11. Verfahren nach irgendeinem der Ansprüche 1 bis 6, dadurch gekennzeichnet, daß die chemisch wirksame Strahlung eine Infrarotstrahlung ist.

12. Verfahren nach irgendeinem der Ansprüche 1 bis 11, dadurch gekennzeichnet, daß es sich bei dem Formwerkzeug um eine elastische Kunststoff-Folie aus einem Material handelt, das zu der aus Polyester, Polyamid, Polyethylen, Polypropylen, Polyurethan, Cellophan, Celluloseacetat, Polyvinylchlorid und Polyvinylidenchlorid bestehenden Gruppe gehört.

13. Verfahren nach irgendeinem der Ansprüche 1 bis 6, dadurch gekennzeichnet, daß es sich bei dem Formwerkzeug um ein starres Formwerkzeug aus einem Material handelt, das zu der aus Polyamid, Polyethylen, Polypropylen, Celluloseacetat, Polyester, Polyurethan und Polvinylchlorid bestehenden Gruppe gehört.

## Revendications

1. Procédé pour fabriquer une préforme rigide multicouche à partir d'un empilage de nappes comprenant une nappe supérieure et une nappe inférieure, chaque nappe contenant un liant qui durcit par exposition à un rayonnement actinique et chaque nappe comprenant des fibres, qui sont liées entre elles de manière à créer un réseau de canaux ouverts en forme de filet à travers la nappe et l'empilage, ledit procédé étant caractérisé par les étapes suivantes :
A. appliquer l'empilage sur une surface d'un moule dans des conditions aérobies, de manière que la nappe inférieure soit en contact avec la surface du moule et qu'il y ait de l'oxygène dans le réseau de canaux ouverts;
B. recouvrir l'empilage par un outil de formage sensiblement imperméable à l'oxygène, de manière que l'outil recouvre la nappe supérieure en délimitant ainsi un volume étanche à l'air entre la surface du moule et l'outil, l'empilage étant contenu dans le volume;
C. établir un vide dans le volume de manière à retirer suffisamment d'oxygène du volume et du réseau des canaux de l'empilage pour les rendre tous deux sensiblement anaérobies;
D. fermer l'outil de formage autour de l'empilage avec une force suffisante, de manière que l'outil comprime l'empilage contre la surface du moule et que l'empilage prenne sensiblement la forme de la surface du moule;
E. exposer l'empilage de l'étape D à une quantité de rayonnement actinique de durcissement pour former une préforme rigide multicouche; et
F. dégager la préforme de la surface du moule.

2. Procédé selon la revendication 1, dans lequel le vide obtenu à l'étape C est d'au moins environ 0,85.10⁵ Pa (635 mm Hg).

3. Procédé selon l'une des revendications 1 ou 2, dans lequel les fibres constituant chaque nappe sont sensiblement transparentes au rayonnement actinique de l'étape E.

4. Procédé selon l'une des revendications 1 à 3, dans lequel l'outil de formage est un film plastique souple.

5. Procédé selon l'une des revendications 1 à 3, dans lequel l'outil de formage est rigide.

6. Procédé selon l'une des revendications 1 à 5, dans lequel au moins la surface du moule ou l'outil de formage est transparent au rayonnement actinique utilisé dans l'étape E.

7. Procédé selon l'une des revendications 1 à 6 dans lequel le rayonnement actinique est un rayonnement ultraviolet.

8. Procédé selon l'une des revendications 1 à 7, dans lequel l'outil de formage est construit en un matériau choisi dans le groupe comprenant le polyamide, le polyéthylène, le polypropylène, le polyuréthane et le poly(métacrylate de méthyle).

9. Procédé selon l'une des revendications 1 à 6, dans lequel le rayonnement actinique est de la lumière visible.

10. Procédé selon l'une des revendications 1 à 4, dans lequel l'outil de formage est un film plastique souple fabriqué en un matériau choisi dans le groupe comprenant le polyamide, le polyéthylène, le polypropylène, le cellophane, l'acétate de cellulose et le poly(chlorure de vinylidène).

11. Procédé selon l'une des revendications 1 à 6, dans lequel le rayonnement actinique est un rayonnement infrarouge.

12. Procédé selon l'une des revendications 1 à 11, dans lequel l'outil de formage est un film plastique souple fabriqué en un matériau choisi dans le groupe comprenant le polyester, le polyamide, le polyéthylène, le polypropylène, le polyuréthane, le cellophane, l'acétate de cellulose, le poly(chlorure de vinyle) et le poly(chlorure de vinylidène).

13. Procédé selon l'une des revendications 1 à 6 dans lequel l'outil de formage est un outil de formage rigide fabriqué en un matériau choisi dans le groupe comprenant le polyamide, le polyéthylène, le polypropylène, l'acétate de cellulose, le polyester, le polyuréthane et le poly(chlorure de vinyle).
